# EUROPÄISCHE PATENTSCHRIFT

(11) **EP 2 898 296 B1**
(45) Veröffentlichungstag und Bekanntmachung des Hinweises auf die Patenterteilung: **21.12.2016**
(21) Anmeldenummer: 13762134.8
(22) Anmeldetag: 14.09.2013
(51) Int. Cl.: G01D 5/245, G01D 5/347

(54) **VORRICHTUNG ZUR ERFASSUNG VON WINKEL- ODER LAGEÄNDERUNGEN**
SYSTEM FOR DETECTING ANGLE OR POSITION VARIATION
SYSTÈME DE DÉTECTION DE VARIATION D'ANGLE OU DE POSITION

(30) Priorität: 19.09.2012 DE 102012018458
(43) Veröffentlichungstag der Anmeldung: 29.07.2015
(73) Patentinhaber: PREMA Semiconductor GmbH, 55129 Mainz (DE)
(72) Erfinder: KUSCHEL, Ralf, 65462 Ginsheim-Gustavsburg (DE); SCHEERER, Joachim, 55130 Mainz (DE); RUMANUS, Schabo, 65207 Wiesbaden (DE)
(74) Vertreter: Oppermann, Frank
(86) Internationale Anmeldenummer: PCT/EP2013/069076
(87) Internationale Veröffentlichungsnummer: WO 2014/044621

(56) Entgegenhaltungen:
- EP-A1- 0 143 525
- EP-A2- 0 412 481
- EP-A2- 1 003 012
- US-A- 4 691 101
- US-A1- 2012 205 528

## Beschreibung

Die Erfindung betrifft eine Vorrichtung zur Erfassung von Winkel- oder Lageänderungen.

Mit den bekannten Vorrichtungen zur Erfassung von Winkel- oder Lageänderungen können Winkeländerung und Drehrichtung bzw. Wegstrecke und Wegrichtung erfasst werden. Diese Vorrichtungen werden auch als Drehgeber, inkrementelle Drehgeber, Inkrementalgeber, Inkrementaldrehgeber oder Drehimpulsgeber bezeichnet.

Es sind Drehgeber bekannt, die über eine Lichtquelle und ein Fotodioden-Array verfügen, zwischen denen eine rotierende Codier-Maske angeordnet ist, deren Winkeländerung und Drehrichtung erfasst wird. Die Codier-Maske ist über eine Welle wiederum mit dem drehbaren Bauteil verbunden, beispielsweise einem Motor, dessen Winkeländerung und Drehrichtung erfasst werden soll. Der Drehgeber kann aber auch Bestandteil des Motors sein, wobei das Gehäuse und die Welle gleichzeitig Komponenten des Motors sind. Der Drehgeber umfasst weiterhin eine Auswerteinrichtung, wobei das Fotodioden-Array und die Auswertelektronik Bestandteil eines gemeinsamen integrierten Schaltkreises sein können.

Die US 3,757,128 beschreibt einen inkrementellen Drehgeber, bei dem über dunkle Teilstriche der ansonsten transparenten Kodier-Scheibe einige Fotodioden des Arrays abgedunkelt werden, während andere durch den transparenten Bereich zwischen den Teilstrichen von der Lichtquelle beleuchtet werden. Die Anordnung der Fotodioden ist dabei so gewählt, dass bei Drehung der Kodier-Scheibe über das Fotodioden-Array in einem sogenannten Zählimpuls- oder Inkrement-Kanal vier Zählimpulssignale A, B, A', B' zur Messung von Drehwinkel und Drehrichtung erzeugt werden.

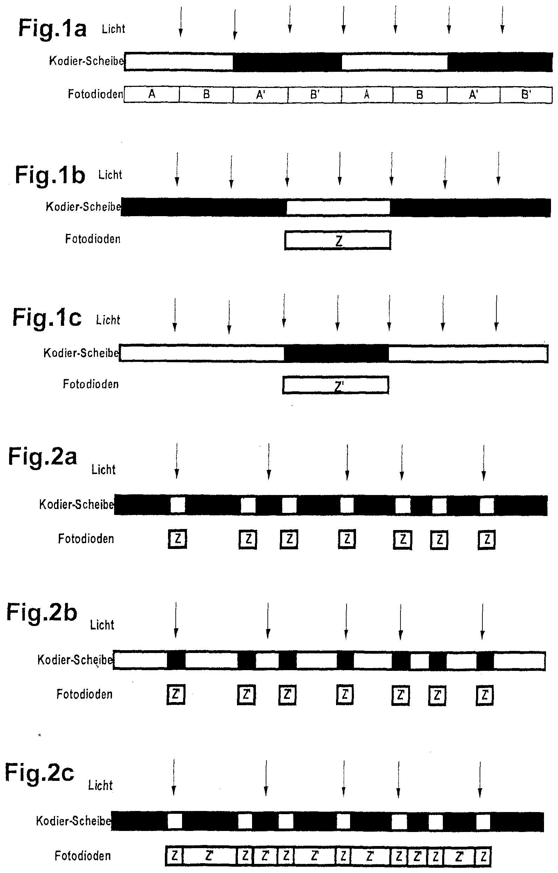

Fig. 1 a zeigt eine von vielen möglichen Ausführungsformen. Die Signale von Inkrement-Kanal A und B sind um 90 Grad zu einander verschoben, so dass hieraus die Drehrichtung von der nachgeschalteten Auswerteinrichtung ermittelt werden kann. Die beiden anderen Signale A' und B' sind die invertierten Signale der Kanäle A und B, die zu einer Verbesserung des Signals beitragen. Ebenfalls zur Verbesserung des Signals werden die Fotodioden für die Signale A, B, A', B' in der gleichen Spur mehrfach hintereinander angeordnet. Aus diesen Signalen kann durch Zählen der Teilstriche aber nur eine relative Winkeländerung in Form von Inkrementen der Länge bzw. dem Winkelbereich T berechnet werden, nicht jedoch, der absolute Winkel.

Aus diesem Grund verfügen die Inkrementalgeber im Allgemeinen über einen Index-Kanal, der zwei weitere Spuren umfasst, wobei mit der einen Spur ein nichtinvertierendes Signal und mit der anderen Spur ein invertierendes Signal erzeugt wird. Für diesen Index-Kanal sind auf der Kodier-Scheibe zur Erzeugung des nicht-invertierten Index-Impulses nur eine einzige kleine transparente Öffnung (Fig. 1 b) und nur ein Teilstrich für den invertierten Index-Puls vorhanden (Fig. 1 c). Die nachgeschaltete Auswerteelektronik verwendet diesen Puls als absoluten Startwinkel Null. Der Index-Impuls wird auch als Z-Impuls und der Index-Kanal als Z-Kanal bezeichnet.

Das von den Fotodioden abgegebene Index-Signal ist jedoch um ein vielfaches kleiner gegenüber dem Zählimpuls-Signal der Mehrfach-Anordnung A, B, A', B' des Zählimpuls-Kanals. Dadurch sind unterschiedliche Verstärkungsfaktoren zwischen den Zählimpulssignalen A, B, A', B' und dem Index-Signal erforderlich. Dies führt zu einer erhöhten Temperaturabhängigkeit der zeitlichen Zuordnung zwischen dem Index-Impuls und dem Zählimpuls Null.

Zur Erreichung der gleichen Signalstärke müsste die Spur des Index-Kanals um ein Vielfaches verbreitert werden. Folglich müsste auch das Fotodioden-Array in radialer Richtung zur Kodier-Scheibe vergrößert werden. Dies hätte aber wiederum zur Folge, dass sich der Durchmesser des Inkrementalgebers einschließlich des integrierten Schaltkreises wesentlich vergrößern würde. Aus diesem Grund platzieren einige Hersteller von Drehgebern die Kombination von Teilstrichen und Fotodioden mehrfach hintereinander in zwei Spuren, für den Index-Kanal (Fig. 2a) und dessen Invertierung (Fig. 2b). Die Abstände der Fotodioden und Teilstriche längs der Drehrichtung ist dabei so gewählt, dass nur bei einem bestimmten Drehwinkel alle Fotodioden gleichzeitig beleuchtet (Index-Kanal) bzw. abgedunkelt (invertierter Index-Kanal) werden.

Beide Methoden haben den Nachteil, dass zwei Spuren benötigt werden. Damit vergrößert sich die Chipfläche des integrierten Schaltkreises und auch der Durchmesser der Kodier-Scheibe und damit des gesamten Drehgebers.

Es hat sich weiterhin gezeigt, dass die Spuren zwischen dem invertierten und nicht invertierten Index-Kanal unterschiedlich von Streulicht beeinflusst werden können, wodurch es zu einer Offsetverschiebung des analogen Eingangssignals kommen kann. Bezogen auf den Zählimpuls-Kanal bedeutet dies eine Verschiebung des Index-Impulses nach der Signalaufbereitung (Digitalisierung). Zudem ist es durch den Einfluss des Streulichtes für sehr hohe Auflösungen (hohe Anzahl von Teilstrichen pro Umdrehung) nicht mehr möglich, schmale Index-Pulse (Breite < 1T) zu erzeugen. Vielmehr werden dann je nach Stärke des Streulichtes die Index-Impulse sogar breiter als 1T und erschweren eine eindeutige Zuordnung der Lage des Index-Impulses zu den durch die Zählimpuls-Signale A, B, A', B' festgelegten Inkrementen.

Die US 4,691,101 schlägt vor, den Bereich zwischen den Fotodioden für das Z-Signal zu nutzen, um ein Z'-Signal zu erzeugen (Fig. 3c). Es hat sich aber gezeigt, dass sich die relative Lage der Pulse zwischen Index und Zählimpuls-Kanal bei zunehmender Umdrehungsgeschwindigkeit verschiebt. Diese Verschiebung kann zu falschen Zählergebnissen führen, insbesondere dann, wenn die Auflösung des Drehwinkels durch digitale Frequenzverdopplung, die beispielsweise aus der US 4,737,721 bekannt ist, oder Reduzierung der Breite der Fotodioden oder Interpolation des Analogsignals weiter erhöht werden soll, jedoch dann je nach Stärke des Streulichtes die Index-Impulse breiter als 1 T werden und damit eine eindeutige Zuordnung der Lage des Index-Impulses zu den durch die Signale A, B, A', B' festgelegten Inkrementen erschwert oder sogar unmöglich wird. Deshalb ist für diese Art von optischen Drehgebern das Produkt aus der Anzahl von Teilstrichen mal der Umdrehungsgeschwindigkeit nicht optimal ausgeschöpft.

Die EP 0 143 525 A1 beschreibt eine Vorrichtung zur Erfassung von Winkel- oder Lageänderungen, die über eine Lichtquelle und eine rotierende Codier-Maske verfügt. Die Codier-Maske umfasst eine Zählimpuls-Spur mit einer Mehrzahl von umfangsmäßig verteilt an-geordneten Segmenten, und eine Index-Spur mit einem radial außenliegenden und einem radial innenliegenden Segment. Den Segmenten der Zählimpuls-Spur ist ein Lichtdetektoren-Array zugeordnet, das eine Vielzahl von Lichtdetektoren aufweist, und jedem der beiden Segmente der Index-Spur ist ein Lichtdetektor zugeordnet, Eine Auswerteinrichtung erzeugt aus den Ausgangssignalen der den beiden der Index-Spur zugeordneten Lichtdetektoren einen Index-Impuls (Z-Impuls). Zur Erzeugung des Z-Impulses werden nur zwei parallel geschaltete Fotodioden gegen eine feste Referenzspannung VR verglichen. Diese Anordnung erzeugt nur einen sehr flach ansteigenden Z-Impuls, der sich je nach Störeinfluss (Rauschen, Temperaturdrift der Fotodioden-Dunkelströme) gegenüber der Zählstruktur verschieben kann. Die Wahrscheinlichkeit, dass es zu einer falschen Zuordnung zwischen Zählstruktur und Index-Markierung kommt, ist somit sehr hoch.

Aus der EP 1 003 012 A2 ist eine optische Positionsmesseinrichtung zur Bestimmung der Relativposition von zwei zueinander beweglichen Objekten bekannt. Die Positionsmesseinrichtung umfasst zur Erzeugung eines Referenzimpulssignals eine Referenzmarkenstruktur, die aus Blöcken besteht, wobei aus den Ausgangssignalen jeder Block-Gruppe ein Referenzimpuls-Ausgangssignal resultiert, das bei einer definierten Relativposition der beiden Objekte ein Maximum oder Minimum hat. Zur Erzeugung des Z-Impulses wird eine zusätzliche Maske für die Decoder-Scheibe verwendet.

Der Erfindung liegt die Aufgabe zugrunde, die Genauigkeit der Messwerterfassung der Vorrichtung zur Erfassung von Winkel- oder Lageänderungen zu verbessern.

Die Lösung dieser Aufgabe erfolgt erfindungsgemäß mit den Merkmalen des Patentanspruchs 1. Die unabhängigen Ansprüche beziehen sich auf vorteilhafte Ausführungsformen der Erfindung.

Die erfindungsgemäße Vorrichtung zur Erfassung von Winkel- oder Lageänderungen weist eine Lichtquelle zum Aussenden von Licht und eine im Strahlengang der Lichtquelle angeordnete Codier-Maske zur Modulation des Lichts auf, die eine in eine vorgegebene Anzahl von Zählimpuls-Inkrementen unterteilte Zählimpuls-Spur und eine in eine vorgegebene Anzahl von Indeximpuls-Inkrementen unterteilte Index-Spur aufweist. Zur Erfassung von Winkeländerungen kann die Codier-Maske als eine drehbare Scheibe oder zur Erfassung von Lageänderungen als ein verschiebbarer Streifen ausgebildet ist. Das Licht der Lichtquelle kann sowohl durch die Kodier-Maske hindurch (Transmission) als auch durch Reflexion von der Kodier-Maske auf die Fotodioden gelangen.

Zum Empfangen des von der Codier-Maske modulierten Lichts und Erzeugen von Ausgangssignalen in Abhängigkeit von der Lichtstärke ist der Zählimpuls-Spur ein Lichtdetektoren-Array mit einer vorgegebenen Anzahl von Lichtdetektoren zugeordnet, die jeweils ein Segment mit einer vorgegebenen Fläche bilden, und der Index-Spur ist ein Lichtdetektoren-Array mit einer vorgegebenen Anzahl von Lichtdetektoren zugeordnet, die jeweils ein Segment mit einer vorgegebenen Fläche bilden

Darüber hinaus verfügt die Vorrichtung über eine die Ausgangssignale der Lichtdetektoren der Lichtdetektoren-Arrays auswertenden Auswerteinrichtung, die derart ausgebildet ist, dass aus den Ausgangssignalen der Lichtdetektoren, die der Zählimpuls-Spur zugeordnet sind, Zählimpulse erzeugt werden, und aus den Ausgangssignalen der Lichtdetektoren, die der Index-Spur zugeordnet sind, ein den Zähl-Impulsen zuzuordnender Index-Impuls erzeugt wird.

Die Auswerteinrichtung weist Mittel zum Bilden eines Summen-Signals aus nicht-invertierten Ausgangssignalen einer ersten Gruppe von Lichtdetektoren des der Index-Spur zugeordneten Lichtdetektoren-Arrays, und aus invertierten Ausgangssignalen einer zweiten Gruppe von Lichtdetektoren des der Index-Spur zugeordneten Lichtdetektoren-Arrays auf.

Der Erfindung liegt die Erkenntnis zugrunde, dass sich die relative Lage der Pulse zwischen Index und Zählimpulskanal aufgrund des für Z und Z' unterschiedliche Flächenverhältnis bzw. der unterschiedlichen Anzahl der Fotodioden für Z und Z' im Vergleich zu den Fotodioden für die Zählimpuls-Signale A, B, A', B' dies Zählimpuls-Kanals bei zunehmender Umdrehungsgeschwindigkeit verschiebt.

Die erfindungsgemäße Vorrichtung zeichnet sich dadurch aus, dass die Summe der Flächen der Lichtdetektoren der ersten Gruppe von Lichtdetektoren des der Index-Spur zugeordneten Lichtdetektoren-Arrays gleich der Summe der Flächen der Lichtdetektoren der zweiten Gruppe von Lichtdetektoren des der Index-Spur zugeordneten Lichtdetektoren-Arrays ist. Die Lichtdetektoren sind vorzugsweise Fotodioden.

Die Anzahl der von der ersten Gruppe von Lichtdetektoren gebildeten Segmente ist gleich der Anzahl der von der zweiten Gruppe von Lichtdetektoren gebildeten Segmente. Vorzugsweise haben die von der ersten Gruppe von Lichtdetektoren gebildeten Segmente jeweils die gleiche Fläche wie die von der zweiten Gruppe von Lichtdetektoren gebildeten Segmente.

Besonders bevorzugt sind die den einzelnen Segmenten zugeordneten Lichtdetektoren die gleichen Lichtdetektoren.

Eine besonders genaue Messwerterfassung wird erfindungsgemäß dadurch erreicht, dass nicht-invertierende und invertierende Signale des Index-Kanals in nur einer Spur mit einer gleichen Anzahl von identischen Fotodioden erzeugt werden. Dadurch lassen sich auch die temperaturabhängigen Sperrströme der Fotodioden gleichmäßig auf die Differenzeingänge eines nachgeschalteten Differenzverstärkers verteilen, dessen hohe Gleichtaktunterdrückung solche Störeinflüsse minimieren kann. Vorzugsweise sind die Signalstärke und die wirksamen elektrischen Kapazitäten der Fotodioden des Index-Kanals auch gleich denen des Zählimpuls-Kanals. Dadurch wird erreicht, dass sämtliche Pulse bis hin zu hohen Umdrehungsgeschwindigkeiten in gleichem Maße verzögert werden.

Die Lichtdetektoren des der Zählimpuls-Spur zugeordneten Lichtdetektoren-Arrays sind vorzugsweise in eine erste Gruppe von Lichtdetektoren, eine zweite Gruppe von Lichtdetektoren, eine dritte Gruppe von Lichtdetektoren und eine vierte Gruppe von Lichtdetektoren unterteilt ist, um mit den einzelnen Gruppen von Lichtdetektoren jeweils ein Zählimpuls-Signal (A, B, A', B') erzeugen zu können.

Für einen besonders symmetrischen Aufbaus sind die erste oder zweite Gruppe von Lichtdetektoren des der Index-Spur zugeordneten Lichtdetektoren-Arrays und die erste Gruppe, zweite Gruppe, dritte Gruppe oder vierte Gruppe von Lichtdetektoren des der Zählimpuls-Spur zugeordneten Lichtdetektoren-Arrays jeweils als ein elektrisches Bauteil ausgebildet, das die gleiche elektrische Kapazität hat. Vorzugsweise weist die erste oder zweite Gruppe von Lichtdetektoren des der Index-Spur zugeordneten Lichtdetektoren-Arrays jeweils die gleiche Anzahl von Lichtdetektoren wie die erste Gruppe, zweite Gruppe, dritte Gruppe oder vierte Gruppe von Lichtdetektoren des der Zählimpuls-Spur zugeordneten Lichtdetektoren-Arrays auf, wobei die erste oder zweite Gruppe von Lichtdetektoren des der Index-Spur zugeordneten Lichtdetektoren-Arrays und die erste Gruppe, zweite Gruppe, dritte Gruppe oder vierte Gruppe von Lichtdetektoren des der Zählimpuls-Spur zugeordneten Lichtdetektoren-Arrays jeweils Segmente mit der gleichen oder annährend gleichen Fläche bilden.

Die Auswerteinrichtung weist vorzugsweise einen Differenzverstärker mit einem nicht-invertieren und einem invertierenden Eingang auf, wobei die erste Gruppe von Lichtdetektoren des der Index-Spur zugeordneten Lichtdetektoren-Arrays an den invertierenden Eingang des Differenzverstärkers und die zweite Gruppe von Lichtdetektoren des der Index-Spur zugeordneten Lichtdetektoren-Arrays an den nicht-invertierenden Eingang des Differenzverstärkers geschaltet sind. Weiterhin weist die Auswerteinrichtung vorzugsweise einen Komparator auf, der derart ausgebildet ist, dass der Komparator einen Index-Impuls erzeugt, wenn das Summen-Signal des Differenzverstärkers größer als ein vorgegebener Schwellwert ist. Anstelle eines Komparators kann für die Signalauswertung aber auch ein Anlag-Digital-Wandler vorgesehen sein.

Eine besonders bevorzugte Ausführungsform sieht vor, dass die Auswerteinrichtung über Mittel zum Vorgeben eines Schwellwertes für den Komparator verfügt, die Mittel zum Messen der Lichtstärke aufweisen. Die Mittel zum Vorgeben eines Schwellwertes sind derart ausgebildet, dass ein Schwellwert vorgegeben wird, dessen Höhe von der gemessenen Lichtstärke abhängig ist. An der Position des Index-Impulses weist die Schaltschwelle des Komparators daher ihr Minimum auf. Dadurch wird erreicht, dass eine Abnahme der Beleuchtungsstärke aufgrund von Alterungserscheinungen der Leuchtdioden kompensiert wird. Die Mittel zum Messen der Lichtstärke sind vorzugsweise ein Fotodioden-Array mit der gleichen Ausbildung wie die Fotodioden-Arrays des Zählimpuls- bzw. Index-Kanals.

Im Folgenden wir ein Ausführungsbeispiel der Erfindung unter Bezugnahme auf die Zeichnungen im Einzelnen erläutert.

Es zeigen:
- Fig. 1 a:: die Kodier-Maske und das Fotodioden-Array des Zählimplus-Kanals (A, B, A', B') eines bekannten Inkrementaldrehgebers,
- Fig. 1b:: den Index-Kanal (Z) des Inkrementaldrehgebers von Fig. 1 a mit einer Fotodiode,
- Fig. 1c:: den invertiertern Index-Kanal (Z') des Inkrementaldrehgebers von Fig. 1 a mit einer Fotodiode,
- Fig. 2a:: den Index-Kanal (Z) eines bekannten Inkrementaldrehgebers mit mehreren Fotodioden,
- Fig. 2b:: den invertierten Index-Kanal (Z') des Inkrementaldrehgebers von Fig. 2a mit mehreren Fotodioden,
- Fig. 2c:: einen einspurigen Index-Kanal (Z) mit mehreren Fotodioden,
- Fig. 3a:: den Zähl-Impuls-Kanal der erfindungsgemäßen Vorrichtung,
- Fig. 3b: den Index-Kanal der erfindungsgemäßen Vorrichtung,
- Fig. 4a:: die Kodier-Scheibe mit Zählimpuls-Kanal und Index-Kanal,
- Fig. 4b:: Zählimpuls-Kanal und Index-Kanal in stark vergrößerter Darstellung,
- Fig. 5:: die wesentlichen Komponenten der erfindungsgemäßen Vorrichtung zur Erfassung von Winkeländerungen in vereinfachter Darstellung,
- Fig. 6:: ein Beispiel zur Veranschaulichung der Erzeugung eines Index-Impulses der erfindungsgemäßen Vorrichtung,
- Fig. 7:: ein Beispiel eines Index-Puls-Signalverlaufs der erfindungsgemäßen Vorrichtung und
- Fig. 8:: eine vereinfachte schematische Darstellung der wesentlichen Komponenten der Auswerteinrichtung der erfindungsgemäßen Vorrichtung.

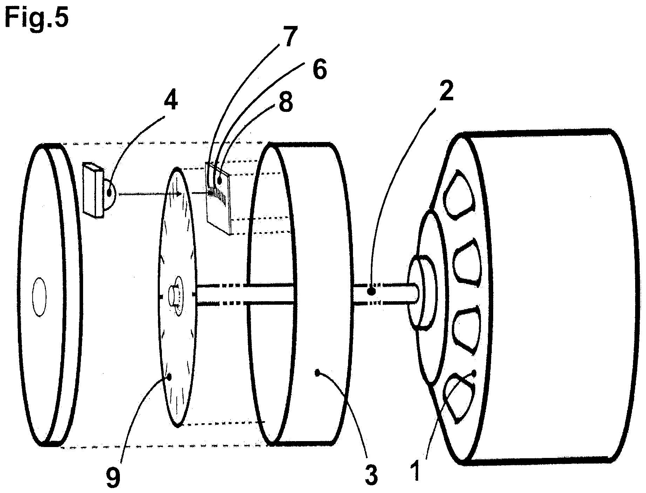

Fig. 5 zeigt in einer vereinfachten Explosionsdarstellung die wesentlichen Komponenten eines Ausführungsbeispiels der erfindungsgemäßen Vorrichtung zur Erfassung von Winkel- oder Lageänderungen. Bei dem vorliegenden Ausführungsbeispiel ist die erfindungsgemäße Vorrichtung eine Vorrichtung zur Erfassung von Winkeländerungen, die Bestandteil eines Motors 1 ist, um die Winkelstellung der Motorwelle 2 erfassen zu können.

Die Vorrichtung zur Erfassung von Winkeländerungen ist in einem äußeren Gehäuseteil 3 des Motors 1 angeordnet. Sie weist eine Lichtquelle 4 auf, die eine oder mehrere Leuchtdioden umfassen kann. Im Strahlengang der Lichtquelle 4 ist eine Anordnung 6 von Lichtdetektoren, insbesondere Fotodioden 7 angeordnet, die Bestandteil eines integrierten Schaltkreises 8 ist, der nur andeutungsweise dargestellt ist. Zwischen der Lichtquelle 4 und der Anordnung 6 von Fotodioden 7 befindet sich im Strahlengang eine Codier-Maske 9, die zur Erfassung von Winkeländerungen eine Kodier-Scheibe ist.

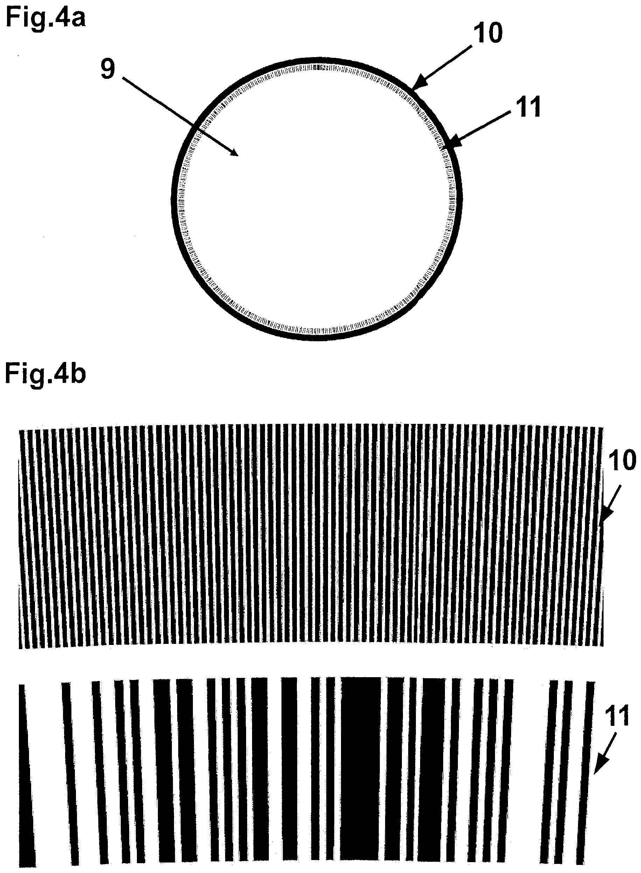

Die Kodier-Scheibe 9 weist eine nur andeutungsweise dargestellte äußere kreisförmige Zählimpuls-Spur 10 und eine innere kreisförmige Index-Spur 11 auf (Fig. 4a). Die Zählimpuls-Spur ist in eine vorgegebene Anzahl von Inkrementen unterteilt, die transparente und nicht transparente Segmente umfassen, und die Index-Spur ist in eine vorgegebene Anzahl von Inkrementen unterteilt, die transparente und nicht transparente Segmente umfassen. Fig. 4b zeigt die Inkremente der Zählimpuls-Spur 10 und der Index-Spur 11 in vergrößerter Darstellung. Für die Erfindung ist wesentlich, dass nur eine einzige Index-Spur 11 auf der Codier-Scheibe 9 vorgesehen ist.

Die Zählimpuls-Spur und Index-Spur mit der Folge von transparenten und nichttransparenten Bereichen modulieren dass von der Lichtquelle 4 ausgesendete Licht, das von der Anordnung 6 von Fotodioden 7 empfangen wird. Die Fotodioden-Anordnung 6 umfasst ein erstes Fotodioden-Array 6A, das der Zählimpuls-Spur 10 zugeordnet ist, und ein zweites Fotodioden-Array 6B, das der Index-Spur 11 zugeordnet ist, um zur Messung von Drehwinkel und -richtung pro Umdrehung der Codier-Scheibe 9 um 360° mit der Zählimpuls-Spur ein Zähimplus-Signal mit vier Zählimpulsen A, B, A', B' und mit der Index-Spur einen Index-Impuls erzeugen zu können.

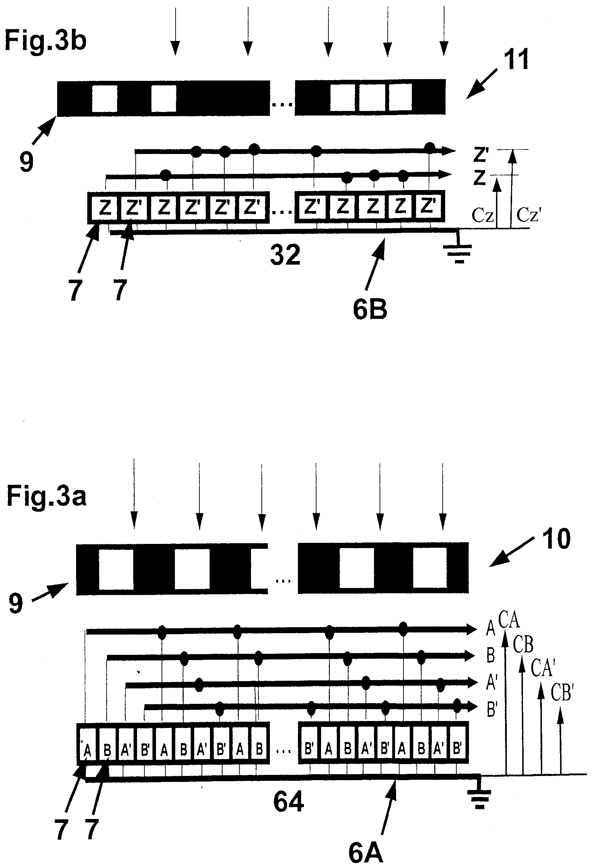

Fig. 3a zeigt in vereinfachter Darstellung das der Zählimpuls-Spur 10 zugeordnete Fotodioden-Array 6A, das bei dem Ausführungsbeispiel 64 Fotodioden 6A umfasst, die in einer Reihe angeordnet sind. Jede Fotodiode 7 bildet ein Segment A, B, A', B' mit einer bestimmten Fläche, die von dem modulierten Licht beleuchtet wird. Die Fotodioden sind in vier Gruppen A, B, A', B' aufgeteilt, an die vier Signalleitungen A, B, A', B' angeschlossen sind.

Die auf dem Halbleiterchip 8 angeordneten Fotodioden 7 haben jeweils zwei Anschlüsse, wobei die einen Anschlüsse sämtlicher Fotodioden mit Masse verbunden sind. Die anderen Anschlüsse der vier Gruppen A, B, A', B' von Fotodioden sind jeweils miteinander verbunden, so dass die erste Gruppe von Fotodioden an der Signalleitung A, die zweite Gruppe von Fotodioden an der Signalleitung B, die dritte Gruppe von Fotodioden an der Signalleitung A' und die vierte Gruppe von Fotodioden an der Signalleitung B' angeschlossen ist. Die jeweils zusammengeschalteten Gruppen von Fotodioden haben dabei eine bestimmte elektrische Kapazität C_{A}, C_{B}, C_{A'}, C_{B'} zwischen den jeweiligen mit A, B, A', B' bezeichneten Anschlüssen und Masse.

Fig. 3b zeigt in vereinfachter Darstellung das der Index-Spur 11 zugeordnete Fotodioden-Array 6B, das 32 Fotodioden 7 umfasst, die in einer Reihe angeordnet sind. Jede Fotodiode bildet wieder ein Segment Z oder Z' mit einer bestimmten Fläche, die von dem modulierten Licht beleuchtet wird. Die auf demselben Halbleiterchip 8 angeordneten Fotodioden 7 sind derart zusammengeschaltet, dass sie eine erste Gruppe Z und eine zweite Gruppe Z' von Fotodioden bilden. Hierzu sind die einen Anschlüsse sämtlicher Fotodioden der ersten Gruppe von Fotodioden und der zweiten Gruppe von Fotodioden 7 jeweils miteinander verbunden, während die anderen Anschlüsse der Fotodioden beider Gruppen mit Masse verbunden sind. Die jeweils zusammengeschalteten Gruppen von Fotodioden haben dabei wieder eine bestimmte elektrische Kapazität C_{Z} bzw. C_{Z'} zwischen den jeweiligen mit Z und Z' bezeichneten Anschlüssen und Masse.

Zur Verarbeitung der Ausgangssignale der Fotodioden verfügt die Vorrichtung über eine Auswerteinrichtung, um die Zählimpulse und den Index-Impuls zu erzeugen. In diesem Zusammenhang werden unter Ausgangssignalen der Fotodioden sämtliche elektrische Signale verstanden, beispielsweise Spannungs- oder Stromsignale. Nachfolgend wird die Erzeugung des Index-Impulses erläutert.

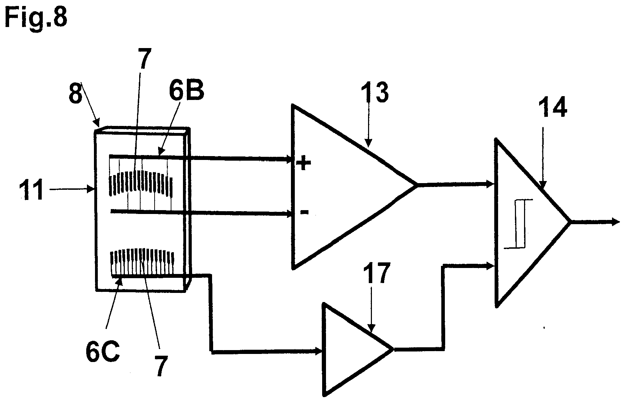

Fig. 8 zeigt in vereinfachter Darstellung die Auswerteinrichtung 12 zur Erzeugung des Index-Impulses. Die Auswerteinrichtung 12 verfügt über einen Differenzverstärker 13 (Operationsverstärker), insbesondere einen Transimpedanzverstärker. Die erste Gruppe der Fotodioden 7 der Index-Spur 11 sind auf den nicht-invertierenden Eingang und die zweite Gruppe der Fotodioden der Index-Spur sind auf den invertierenden Eingang des Differenzverstärkers 13 geschaltet, so dass am Ausgang des Differenzverstärkers das Summen-Signal aus den nicht-invertierten Ausgangssignalen der ersten Gruppe von Fotodioden und den invertierten Ausgangssignalen der zweiten Gruppe von Fotodioden anliegt.

Die Auswerteinrichtung 12 weist weiterhin einen Komparator 14 auf, der zwei Signaleingänge aufweist, wobei das Ausgangssignal des Differenzverstärkers 13 an dem einen Signaleingang und an dem anderen Signaleingang ein Referenzsignal anliegt, mit dem ein bestimmter Schwellwert vorgegeben wird. Der Komparator 14 erzeugt den Index-Impuls, wenn die Amplitude des Summen-Signals oberhalb des vorgegebenen Schwellwertes liegt.

In der einzigen Index-Spur 11 sind die nicht transparenten Teilstriche (Inkremente) auf der Kodier-Scheibe 9 des Z-Kanals und die zu einem positiven bzw. negativen Signal beitragenden Fotodioden 7 so angeordnet, dass über eine 360° Drehung nur in einer beliebig fest zu legenden Index-Position 0°der Index-Impuls erzeugt wird. Dazu werden in dieser beliebig fest zu legenden Index-Position alle zu einem negativen Signal beitragenden Fotodioden durch Teilstriche der Kodier-Scheibe abgeschattet, während die zu einem positiven Signal beitragenden Fotodioden nicht abgedeckt sind und von der Lichtquelle 4 bestrahlt werden.

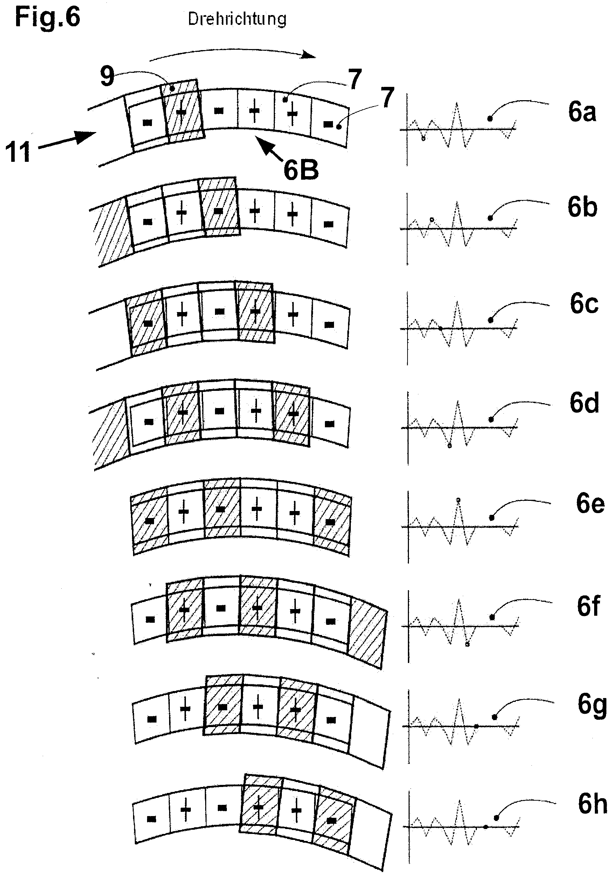

Fig. 6 zeigt als Sequenz wie die transparente Kodier-Scheibe 9 mit den aufgedruckten Teilstrich-Muster der Index-Spur 11 von links nach rechts über das Fotodioden-Array 6B der Index-Spur gedreht wird und dabei jeweils bestimmte Fotodioden 7 abschattet.

In den zugehörigen Signal-Diagrammen 6a bis 6h ist die jeweilige Stellung der Kodier-Scheibe 9 mit einem Punkt gekennzeichnet, der die Signalhöhe als Summe der beleuchteten Fotodioden 7 anzeigt. Die mit'+' gekennzeichneten Fotodioden 7 sind an den Plus-Eingang des Differenzverstärkers 13 angeschlossen und tragen zu einem positiven Signal bei, während die mit '-' gekennzeichneten Fotodioden 7 an den Minus-Eingang des Differenzverstärkers 13 angeschlossen sind und zu einem negativen Signal beitragen. Im Diagramm 6e ist das höchste Signal gekennzeichnet, dass dem Index-(Z)-Impuls entspricht. Hier werden nur die mit '+' gekennzeichneten Fotodioden beleuchtet, während die anderen Fotodioden abgedeckt sind und kein Signal erzeugen.

Die Anzahl der Fotodioden 7 wurde in Fig. 6 nur zur Verdeutlichung des Prinzips auf 6 Fotodioden begrenzt. Höhere und schärfere Z-Pulse können jedoch mit einer größeren Anzahl von Fotodioden erzielt werden. Bei dem vorliegenden Ausführungsbeispiel werden daher jeweils 16 Fotodioden für Z und 16 Fotodioden für Z' benutzt.

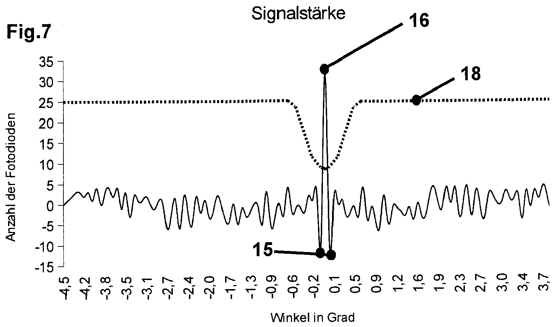

Darüber hinaus sind die Fotodioden des Arrays und das Kodier-Scheiben-Muster so ausgebildet, dass bei den links und rechts zum Index-Impuls benachbarten Inkrementen ein negativer Puls mit betragsmäßig etwa halber Höhe wie der Z-Puls entsteht (Fig. 7). Das heißt, unmittelbar vor und nach dem Z-Puls sind mehr positive als negative Fotodioden durch die Kodier-Scheibe abgeschattet, während beim Z-Puls alle negativen Fotodioden abgedeckt sind. Dadurch wird der Einfluss von Streulicht auf die Z-Puls-Breite und somit seine unerwünschte Verbreiterung verhindert. Für alle anderen Inkremente ergeben die Teilstriche nur ein geringes Signal, das unterhalb eines bestimmten Schwellwertes liegen soll.

Das Muster der Teilstriche ist derart ausgebildet, dass bei einer 360° Drehung der Kodier-Scheibe in einem Bereich außerhalb des Index-Impulses eine über den Umfangsbereich annähernd gleiche, aber höhere Helligkeit detektiert wird als in unmittelbarer Nähe des Index-Impulses 16. Da die Schaltschwelle 18 des Komparators von der Helligkeit des einfallenden Lichts über die gesamte Breite des Fotodioden-Arrays 7 abhängt, erhöht sich die Schaltschwelle 18 des Komparators außerhalb des Bereichs, in dem sich der Index-Impuls befindet (Fig. 7). Dadurch wird das Signal zu Rauschverhältnis zusätzlich erhöht.

Das Muster für die Anordnung der Kodier-Scheibe für den Index-Impuls sowie das Fotodioden-Array wurde nach dem sogenannten "Travelling Salesman Problem"-Verfahren zur Pulsformung entwickelt. Die Optimierung nach den hier gefundenen Vorgaben kann beispielsweise mit einem Software-Programm erstellt werden, das einen genetischen Algorithmus nutzt. Die Kodier-Masken-Anordnung und die Anordnung der Fotodioden wurden als Vektoren basierend auf einem Kosten-Verteilungsschlüssel von dem Programm iterativ erstellt, wobei das Ziel des Programms in der Minimierung der Kosten liegt. Dabei wurden Kosten für die folgenden Schlüssel vorgegeben:
- wenn der Index-Impuls nicht die gewünschte Höhe erreicht;
- wenn die direkten Nachbarn des Index-Impulses nicht ausreichend negativ sind;
- wenn beide Nachbarn des Index-Impulses ungleiche Höhe aufweisen;
- wenn Signale mit Ausnahme des gewünschten Z-Pulses zu hohe Werte erreichen;
- wenn die Anzahl der Fotodioden für den positiven und negativen Eingang des Differenzverstärkers ungleich ist;
- wenn die Standard-Abweichung außerhalb des Index-Impulses groß wird;
- wenn das Signal zu Rauschverhältnis (Index-Impuls zu höchstem Signal außerhalb des Index-Impulses) zu groß wird;
- wenn alle Werte des Vektors gleich sind (0 oder 1),
- wenn die Schaltschwelle des Komparators ihr Minimum genau an der Position des Index-Impulses aufweist.

Als Ergebnis erhält man ein Summen-Signal, das in Fig. 7 als Kurve dargestellt ist. Die beiden negativen Signale 15 neben dem Index-Impuls tragen unabhängig von der Drehrichtung zu einem schmalen und steilen Index-Impuls 16 bei. Genau an dieser Position hat auch die Schaltschwelle des Komparators ihr Minimum.

Die erste und zweite Gruppe von Fotodioden 7 des Fotodioden-Arrays 6B des Index-Kanals haben einen möglichst symmetrischen Aufbau. Bei dem besonders bevorzugten Ausführungsbeispiel hat die erste Gruppe Z von Fotodioden 7 die gleiche Anzahl von Fotodioden wie die zweite Gruppe Z' von Fotodioden. Sämtliche Fotodioden 7 sind die gleichen Fotodioden. Folglich ist auch die Fläche der von den Fotodioden gebildeten Segmente gleich. Dadurch wird die Temperaturabhängigkeit der Sperrströme der Fotodioden minimiert, was in der praktischen Ausführung einer Verbesserung der Messgenauigkeit beiträgt.

Zur Erzielung eines höheren Geschwindigkeits-Produktes SP, das als das Produkt von der Anzahl der Teilstriche von A, B, A', B' und der Umdrehungsgeschwindigkeit definiert ist, haben das Fotodioden-Array 6B des Index-Kanals und das Fotodioden-Array 6A des Zählimpuls-Kanals den gleichen Aufbau.

Bei dem vorliegenden Ausführungsbeispiel besteht das Fotodioden-Array 6A des Zählimpuls-Kanals aus den gleichen oder gleichartigen Fotodioden 7 wie das Fotodioden-Array 6B des Index-Kanals. Dabei haben sämtliche Gruppen A, B, A', B' von Fotodioden des Zählimpuls-Kanals 10 jeweils die gleiche Anzahl von Fotodioden. Weiterhin ist die Anzahl der Fotodioden einer Gruppe (Z oder Z') von Fotodioden des Index-Kanals 11 gleich der Anzahl der Fotodioden einer Gruppe (A, B, A', B') von Fotodioden des Zählimpulskanals 10.

Bei den Ausführungsbeispiel weist das Fotodioden-Array 6B des Index-Kanals 11 16 Z-Fotodioden und 16 Z' Fotodioden, d. h. insgesamt 32 Fotodioden auf, während das Fotodioden-Array 6A des Zählimpulskanals 10 16 A-Fotodioden, 16 B-Fotodioden, 16 A'-Fotodioden und 16 B'-Fotodioden, d. h. insgesamt 64 Fotodioden, aufweist. Bei dieser Aufteilung haben sämtliche Gruppen von zusammengeschalteten Fotodioden idealerweise die gleiche Kapazität C, wobei C = C_{Z} = C_{Z'} = C_{A} = C_{B} = C_{A'} = C_{B'} ist. Es können aber auch die Zeitkonstanten R C gleich sein, wobei R der Eingangswiderstand des Differenzverstärkers ist, so dass die zeitliche Phasenverschiebung zwischen Index-Puls und Zählimpuls bei dem maximalen gewünschten Geschwindigkeitsprodukt SP klein gegenüber 1/SP ist (C R = C_{Z} R_{Z}= C_{Z'} R_{Z'} = C_{A} R_{A}= C_{B} R_{B}= C_{A'} R_{A'}= C_{B'} R_{B'}).

Der einzige Unterschied zwischen den Fotodioden-Arrays liegt also in der unterschiedlichen Verschaltung der Fotodioden. Dadurch bleibt der Index-Impuls auch bei hohen Geschwindigkeiten synchron zum korrespondierenden Zähl-Impuls und bleibt in seiner relativen Lage zum Zähl-Impuls sehr temperaturstabil, da sich die physikalischen Eigenschaften (Kapazität; Ladungsträger-Laufzeiten) zwischen beiden Kanälen gar nicht und die beiden Frequenzspektren von Zähl-Impuls und Index-Impuls im Zeitbereich des Auftretens des Index-Impulses allenfalls nur geringfügig unterscheiden.

Bei der Auswerteinrichtung 12 wird der Schwellwert des Komparators 14 über eine Referenzspannung vorgegeben. Neben dem Fotodioden-Array des Index-Kanals ist ein weiteres Fotodioden-Array 6C vorgesehen, das neben dem Fotodioden-Array des Index-Kanals angeordnet werden kann. Dieses Hilfs-Fotodioden-Array 6C ist über einen Verstärker 17 mit dem Referenzeingang des Komparators 14 verbunden, so dass die Schaltschwelle des Komparators in Abhängigkeit von dem auf das Hilfs-Fotodioden-Array fallende (Streu)-Licht auf den optimalen Signal-Rauschabstand angehoben wird. Die gestrichelte Linie 18 in Fig. 8 zeigt den Schwellwert des Komparators.

Das Hilfs-Foto-Dioden-Array 6C hat das gleiche Übersprechverhalten wie das Fotodioden-Array 6A für die Zählimpuls-Signale A, B, A', B' und Fotodioden-Array 6B des Index-Kanals. Damit lässt sich die Höhe der Schaltschwelle 18 des Komparators 14 durch die Anzahl der verwendeten Hilfs-Fotodioden eindeutig bestimmen, was die Entwicklungszeit für neue Drehgeber reduziert, bzw. einen nachträglichen Abgleich der Schaltschwelle des Komparators überflüssig macht. Trotz Alterung der Beleuchtungs-LED bleibt das Verhältnis von Schaltschwelle des Komparators zu Signalstärke und somit auch die Pulsbreite des Index-Impulses konstant. Die Schärfe des Index-Pulses, d.h. seine Breite von weniger als ein Inkrement T wird dadurch gewährleistet, dass jeweils ein Inkrement vor und nach dem Index-Impuls 16 ein Signal 15 entgegengesetzter Polarität erzeugt. Da auch der Einfluss des Streulichtes sich sowohl auf den Index- als auch auf den Zählimpuls-Kanal gleich auswirkt, ist die Justierung der Lichtquelle 4, der Kodier-Maske 9 und eines oder mehrerer integrierter Schaltkreise einfacher und schneller zu bewerkstelligen als bei herkömmlichen Drehgebern, wodurch sich geringere Herstellungskosten ergeben.

Eine Erhöhung der Winkel-Auflösung kann dadurch erreicht werden, dass bei den Inkrement-Zählimpuls-Kanälen A, A' und B, B' anstatt eines Komparators ein A/D-Wandler eingesetzt wird. Die Kodier-Maske kann sich anstatt auf einer Kodier-Scheibe auch auf einer drehenden Trommel oder für lineare Positionsgeber auf einem linearen beweglichen Streifen befinden. Der mit der hier beschriebenen Methode erzeugte schmale Z-Signal-Puls kann für besondere Anwendungszwecke auch mehrfach pro Spur und auch in mehreren Spuren erzeugt werden.

Mit der erfindungsgemäßen Vorrichtung kann ein scharfer Index-Impuls, der schmaler als ein Inkrement T ist, mit einem hohen Signal-Rausch-Verhältnis erzielt werden. Die Vorrichtung zeichnet sich durch gleiches Übersprech- und Streulicht-Verhalten der Fotodioden für den Index-Kanal und für die Inkrement-Zählimpulse A, B, A', B aus.

## Patentansprüche

1. Vorrichtung zur Erfassung von Winkel- oder Lageänderungen mit
einer Lichtquelle (4) zum Aussenden von Licht,
einer im Strahlengang der Lichtquelle angeordneten Codier-Maske (9) zur Modulation des Lichts, die eine in eine vorgegebene Anzahl von Zählimpuls-Inkrementen unterteilte Zählimpuls-Spur (10) und eine in eine vorgegebene Anzahl von Indeximpuls-Inkrementen unterteilte Index-Spur (11) aufweist,
einem der Zählimpuls-Spur zugeordnetes Lichtdetektoren-Array (6A) mit einer vorgegebenen Anzahl von Lichtdetektoren (7), die jeweils ein Segment mit einer vorgegebenen Fläche bilden, und einer der Index-Spur zugeordnetes Lichtdetektoren-Array (6B) mit einer vorgegebenen Anzahl von Lichtdetektoren (7), die jeweils ein Segment mit einer vorgegebenen Fläche bilden, zum Empfangen des von der Codier-Maske modulierten Lichts und Erzeugen von Ausgangssignalen in Abhängigkeit von der Lichtstärke,
einer die Ausgangssignale der Lichtdetektoren der Lichtdetektoren-Arrays auswertenden Auswerteinrichtung (12), die derart ausgebildet ist, dass aus den Ausgangssignalen der Lichtdetektoren, die der Zählimpuls-Spur zugeordnet sind, Zählimpulse erzeugt werden, und aus den Ausgangssignalen der Lichtdetektoren, die der Index-Spur zugeordnet sind, ein den Zähl-Impulsen zuzuordnender Index-Impuls (16) erzeugt wird,
**dadurch gekennzeichnet, dass**
das der Index-Spur (11) zugeordnete Lichtdetektoren Array (6B) eine erste Gruppe von Lichtdetektoren und eine zweite Gruppe von Lichtdetektoren aufweist, wobei
die Summe der Flächen der Lichtdetektoren (7) der ersten Gruppe (Z) von Lichtdetektoren des der Index-Spur (11) zugeordneten Lichtdetektoren-Arrays (6B) im Wesentlichen gleich der Summe der Flächen der Lichtdetektoren (7) der zweiten Gruppe (2') von Lichtdetektoren des der Index-Spur (11) zugeordneten Lichtdetektoren-Arrays (6B) ist, und die Anzahl der von der ersten Gruppe (Z) von Lichtdetektoren gebildeten Segmente gleich der Anzahl der von der zweiten Gruppe (Z') von Lichtdetektoren gebildeten Segmente ist,
die Auswerteinrichtung (12) Mittel (13) zum Bilden eines Summen-Signals aus nicht-invertierten Ausgangssignalen des der ersten Gruppe von Lichtdetektoren des der Index-Spur (11) zugeordneten Lichtdetektoren-Arrays (6B), und aus invertierten Ausgangssignalen des der zweiten Gruppe von Lichtdetektoren des der Index-Spur (11) zugeordneten Lichtdetektoren-Arrays (6B) aufweist, und
in der einzigen Index-Spur (11) nicht transparente Inkremente auf der Codier-Maske (9) und zu einem positiven bzw. negativen Signal beitragende Lichtdetektoren (7) so angeordnet sind, dass über eine 360° Drehung der Codier-Maske (9) nur in einer beliebig fest zu legenden Index-Position 0° der Index-Impuls erzeugt wird, in der alle zu einem negativen Signal beitragenden Lichtdetektoren durch Inkremente der Codier-Maske (9) abgeschattet werden, während die zu einem positiven Signal beitragenden Lichtdetektoren nicht abgedeckt sind und von der Lichtquelle (4) bestrahlt werden.

2. Vorrichtung nach Anspruch 1, **dadurch gekennzeichnet, dass** die von der ersten Gruppe (Z) von Lichtdetektoren gebildeten Segmente die im Wesentlichen gleiche Fläche wie die von der zweiten Gruppe (Z') von Lichtdetektoren gebildeten Segmente haben.

3. Vorrichtung nach Anspruch 1 oder 2, **dadurch gekennzeichnet, dass** die den einzelnen Segmenten zugeordneten Lichtdetektoren (7), die im Wesentlichen gleichen Lichtdetektoren sind.

4. Vorrichtung nach einem der Ansprüche 1 bis 3, **dadurch gekennzeichnet, dass** die Auswerteinrichtung (12) einen Differenzverstärker (14) mit einem nicht-invertieren und einem invertierenden Eingang aufweist, wobei die erste Gruppe (Z) von Lichtdetektoren des der Index-Spur (11) zugeordneten Lichtdetektoren-Arrays (6B) an den invertierenden Eingang des Differenzverstärkers und die zweite Gruppe (Z') von Lichtdetektoren des der Index-Spur zugeordneten Lichtdetektoren-Arrays an den nicht-invertierenden Eingang des Differenzverstärkers geschaltet sind.

5. Vorrichtung nach Anspruch 4, **dadurch gekennzeichnet, dass** die Auswerteinrichtung (12) einen Komparator (14) aufweist, der derart ausgebildet ist, dass der Komparator einen Index-Impuls (16) erzeugt, wenn das Summen-Signal des Differenzverstärkers (13) größer als ein vorgegebener Schwellwert (18) ist.

6. Vorrichtung nach Anspruch 5, **dadurch gekennzeichnet, dass** die Auswerteinrichtung(12) Mittel (17) zum Vorgeben eines Schwellwertes (18) für den Komparator (14) aufweist, die Mittel (6C) zum Messen der Lichtstärke aufweisen, wobei die Mittel (17) zum Vorgeben eines Schwellwertes derart ausgebildet sind, dass ein Schwellwert vorgegeben wird, dessen Höhe von der gemessenen Lichtstärke abhängig ist.

7. Vorrichtung nach einem der Ansprüche 1 bis 6, **dadurch gekennzeichnet, dass** die Lichtdetektoren (7) des der Zählimpuls-Spur (10) zugeordneten Lichtdetektoren-Arrays (6A) in eine erste Gruppe (A) von Lichtdetektoren, eine zweite Gruppe (B) von Lichtdetektoren, eine dritte Gruppe (A') von Lichtdetektoren und eine vierte Gruppe (B') von Lichtdetektoren unterteilt ist, wobei die Lichtdetektoren- einer Gruppe von Lichtdetektoren jeweils ein Zählimpuls-Signal (A, B, A', B') erzeugen, und
dass die erste Gruppe oder zweite Gruppe von Lichtdetektoren des der Index-Spur zugeordneten Lichtdetektoren-Arrays (6B) und die erste Gruppe, zweite Gruppe, dritte Gruppe oder vierte Gruppe von Lichtdetektoren des der Zählimpuls-Spur zugeordneten Lichtdetektoren-Arrays (6A) jeweils als ein elektrisches Bauteil ausgebildet sind, dass die gleiche elektrische Kapazität hat.

8. Vorrichtung nach einem der Ansprüche 1 bis 7, **dadurch gekennzeichnet, dass** die erste Gruppe oder zweite Gruppe von Lichtdetektoren des der Index-Spur zugeordneten Lichtdetektoren-Arrays (6B) jeweils die gleiche Anzahl von Lichtdetektoren wie die erste Gruppe oder zweite Gruppe oder dritte Gruppe oder vierte Gruppe von Lichtdetektoren des der Zählimpuls-Spur zugeordneten Lichtdetektoren-Arrays (6A) aufweisen.

9. Vorrichtung nach einem der Ansprüche 1 bis 8, **dadurch gekennzeichnet, dass** die Lichtdetektoren der ersten Gruppe oder zweiten Gruppe von Lichtdetektoren des der Index-Spur zugeordneten Lichtdetektoren-Arrays (6B) und die Lichtdetektoren der ersten Gruppe oder zweiten Gruppe oder dritten Gruppe oder vierten Gruppe von Lichtdetektoren des der Zählimpuls-Spur zugeordneten Lichtdetektoren-Arrays (6A) Segmente mit der gleichen Fläche bilden.

10. Vorrichtung nach einem der Ansprüche 1 bis 9, **dadurch gekennzeichnet, dass** die Lichtdetektoren des der Zählimpuls-Spur zugeordneten Lichtdetektoren-Arrays (6A) und die Lichtdetektoren des der Index-Spur zugeordneten Lichtdetektoren-Arrays (6B) die gleichen Lichtdetektoren (7) sind.

11. Vorrichtung nach einem der Ansprüche 1 bis 10, **dadurch gekennzeichnet, dass** die Lichtdetektoren Fotodioden (7) sind.

12. Vorrichtung nach einem der Ansprüche 1 bis 11, **dadurch gekennzeichnet, dass** die Codier-Maske (9) als eine drehbare Scheibe ausgebildet ist.

13. Vorrichtung nach einem der Ansprüche 1 bis 11, **dadurch gekennzeichnet, dass** die Cordier-Maske (9) als ein verschiebbarer Streifen ausgebildet ist.

## Claims

1. Apparatus for detecting angle or position changes, comprising
a light source (4) for emitting light,
a coding mask (9) for modulating the light that is arranged in the beam path of the light source and comprises a counting pulse track (10), which is divided into a predetermined number of counting pulse increments, and an index track (11), which is divided into a predetermined number of index pulse increments,
a photosensor array (6A) which is associated with the counting pulse track and has a predetermined number of photosensors (7) that each form a segment having a predetermined surface area, and a photosensor array (6B) which is associated with the index track and has a predetermined number of photosensors (7) that each form a segment having a predetermined surface area, which arrays are intended for picking up the light modulated by the coding mask and for producing output signals depending on the light intensity,
an analysis device (12) which analyses the output signals of the photosensors of the photosensor arrays and is designed such that counting pulses are generated from the output signals of the photosensors associated with the counting pulse track and such that an index pulse (16) which is to be associated with the counting pulses is generated from the output signals of the photosensors associated with the index track,
**characterised in that**
the photosensor array (6B) associated with the index track (11) comprises a first group of photosensors and a second group of photosensors,
the sum of the surface areas of the photosensors (7) in the first group (Z) of photosensors of the photosensor array (6B) associated with the index track (11) being substantially the same as the sum of the surface areas of the photosensors (7) in the second group (Z') of photosensors of the photosensor array (6B) associated with the index track (11), and the number of segments formed by the first group (Z) of photosensors being the same as the number of segments formed by the second group (Z') of photosensors,
the analysis device (12) comprising means (13) for forming a sum signal composed of non-inverted output signals of the first group of photosensors of the photosensor array (6B) associated with the index track (11), and of inverted output signals of the second group of photosensors of the photosensor array (6B) associated with the index track (11), and
non-transparent increments on the coding mask (9) and photosensors (7), which contribute to a positive or negative signal, being arranged in the single index track (11) such that, of the 360° of rotation of the coding mask (9), the index pulse is generated only in an index position of 0° to be fixed arbitrarily in which all the photosensors that contribute to a negative signal are shadowed by increments of the coding mask (9), whilst the photosensors that contribute to a positive signal are not covered and are irradiated by the light source (4).

2. Apparatus according to claim 1, **characterised in that** the segments formed by the first group (Z) of photosensors have substantially the same surface area as the segments formed by the second group (Z') of photosensors.

3. Apparatus according to either claim 1 or claim 2, **characterised in that** the photosensors (7) associated with the individual segments are substantially the same photosensors.

4. Apparatus according to any of claims 1 to 3, **characterised in that** the analysis device (12) comprises a differential amplifier (14) having a non-inverting and an inverting input, the first group (Z) of photosensors of the photosensor array (6B) associated with the index track (11) being connected to the inverting input of the differential amplifier and the second group (Z') of photosensors of the photosensor array associated with the index track being connected to the non-inverting input of the differential amplifier.

5. Apparatus according to claim 4, **characterised in that** the analysis device (12) comprises a comparator (14) designed such that the comparator generates an index pulse (16) when the sum signal of the differential amplifier (13) is greater than a predetermined threshold value (18).

6. Apparatus according to claim 5, **characterised in that** the analysis device (12) comprises means (17) for predetermining a threshold value (18) for the comparator (14), which comprise means (6C) for measuring the light intensity, the means (17) for predetermining a threshold value being designed such that a threshold value is predetermined of which the magnitude is dependent on the measured light intensity.

7. Apparatus according to any of claims 1 to 6, **characterised in that** the photosensors (7) of the photosensor array (6A) associated with the counting pulse track (10) are divided into a first group (A) of photosensors, a second group (B) of photosensors, a third group (A') of photosensors and a fourth group (B') of photosensors, the photosensors in a group of photosensors each generating a counting pulse signal (A, B, A', B'), and
**in that** the first group or second group of photosensors of the photosensor array (6B) associated with the index track and the first group, second group, third group or fourth group of photosensors of the photosensor array (6A) associated with the counting pulse track are each designed as an electric component that has the same electrical capacitance.

8. Apparatus according to any of claims 1 to 7, **characterised in that** the first group or second group of photosensors of the photosensor array (6B) associated with the index track each comprise the same number of photosensors as the first group or second group or third group or fourth group of photosensors of the photosensor array (6A) associated with the counting pulse track.

9. Apparatus according to any of claims 1 to 8, **characterised in that** the photosensors of the first group or second group of photosensors of the photosensor array (6B) associated with the index track and the photosensors of the first group or second group or third group or fourth group of photosensors of the photosensor array (6A) associated with the counting pulse track form segments having the same surface area.

10. Apparatus according to any of claims 1 to 9, **characterised in that** the photosensors of the photosensor array (6A) associated with the counting pulse track and the photosensors of the photosensor array (6B) associated with the index track are the same photosensors (7).

11. Apparatus according to any of claims 1 to 10, **characterised in that** the photosensors are photodiodes (7).

12. Apparatus according to any of claims 1 to 11, **characterised in that** the coding mask (9) is designed as a rotary disc.

13. Apparatus according to any of claims 1 to 11, **characterised in that** the coding mask (9) is designed as a movable strip.

## Revendications

1. Dispositif servant à détecter des changements d'angle ou de position, comprenant une source de lumière (4) servant à émettre de la lumière,
un masque de codage (9) disposé dans le trajet des rayons de la source de lumière, servant à moduler la lumière, lequel présente une piste de comptage d'impulsions (10) divisée en un nombre prédéfini d'incréments de comptage d'impulsions et une piste index (11) divisée en un nombre prédéfini d'incréments d'index d'impulsions,
un tableau de photodétecteurs (6A) associé à la piste de comptage d'impulsions, avec un nombre prédéfini de photodétecteurs (7), qui forment respectivement un segment avec une surface prédéfinie, et un tableau de photodétecteurs (6B) associé à la piste index, avec un nombre prédéfini de photodétecteurs (7), qui forment respectivement un segment avec une surface prédéfinie, servant à recevoir la lumière modulée par le masque de codage et à produire des signaux de sortie en fonction de l'intensité de la lumière,
un système d'évaluation (12) évaluant les signaux de sortie des photodétecteurs des tableaux de photodétecteurs, lequel est réalisé de telle manière que des impulsions de comptage sont produites à partir des signaux de sortie des photodétecteurs, qui sont associés à la piste de comptage d'impulsions et qu'une impulsion index (16) à associer aux impulsions de comptage est produite à partir de signaux de sortie des photodétecteurs, qui sont associés à la piste index,
**caractérisé en ce que**
le tableau de photodétecteurs (6B) associé à la piste index (11) présente un premier groupe de photodétecteurs et un deuxième groupe de photodétecteurs, dans lequel la somme des surfaces des photodétecteurs (7) du premier groupe (Z) de photodétecteurs du tableau de photodétecteurs (6B) associé à la piste index (11) est sensiblement égale à la somme des surfaces des photodétecteurs (7) du deuxième groupe (Z') de photodétecteurs du tableau de photodétecteurs (6B) associé à la piste index (11) et le nombre des segments formés par le premier groupe (Z) de photodétecteurs est égal au nombre des segments formés par le deuxième groupe (Z') de photodétecteurs,
le système d'évaluation (12) présente des moyens (13) servant à former un signal somme à partir de signaux de sortie non inversés du premier groupe de photodétecteurs du tableau de photodétecteurs (6B) associé à la piste index (11) et à partir des signaux de sortie inversés du deuxième groupe de photodétecteurs du tableau de photodétecteurs (B6) associé à la piste index (11), et
des incréments non transparents sur le masque de codage (9) et des photodétecteurs (7) contribuant à un signal positif ou négatif sont disposés dans l'unique piste index (11) de telle sorte que sur une rotation de 360° du masque de codage (9), l'impulsion index est produite seulement dans une position index 0° à fixer de manière quelconque, dans laquelle tous les photodétecteurs contribuant à un signal négatif sont désactivés par des incréments du masque de codage (9), tandis que les photodétecteurs contribuant à un signal positif ne sont pas recouverts et sont exposés au rayonnement de la source de lumière (4).

2. Dispositif selon la revendication 1, **caractérisé en ce que** les segments formés par le premier groupe (Z) de photodétecteurs ont sensiblement la même surface que les segments formés par le deuxième groupe (Z') de photodétecteurs.

3. Dispositif selon la revendication 1 ou 2, **caractérisé en ce que** les photodétecteurs (7) associés aux divers segments sont sensiblement les mêmes photodétecteurs.

4. Dispositif selon l'une quelconque des revendications 1 à 3, **caractérisé en ce que** le système d'évaluation (12) présente un amplificateur de différence (14) avec une entrée non inversée et une entrée à inversion, dans lequel le premier groupe (Z) de photodétecteurs du tableau de photodétecteurs (6B) associé à la piste index (11) est commuté au niveau de l'entrée à inversion de l'amplificateur de différence et le deuxième groupe (Z') de photodétecteurs du tableau de photodétecteurs associé à la piste index est commuté au niveau de l'entrée sans inversion de l'amplificateur de différence.

5. Dispositif selon la revendication 4, **caractérisé en ce que** le système d'évaluation (12) présente un comparateur (14), qui est réalisé de telle manière que le comparateur produit une impulsion index (16) quand le signal somme de l'amplificateur de différence (13) est plus important qu'une valeur de seuil (18) prédéfinie.

6. Dispositif selon la revendication 5, **caractérisé en ce que** le système d'évaluation (12) présente des moyens (17) servant à prédéfinir une valeur de seuil (18) pour le comparateur (14), lesquels présentent des moyens (6C) servant à mesurer l'intensité de la lumière, dans lequel les moyens (17) servant à prédéfinir une valeur de seuil sont réalisés de telle manière qu'une valeur de seuil est prédéfinie, dont le niveau dépend de l'intensité de la lumière mesurée.

7. Dispositif selon l'une quelconque des revendications 1 à 6, **caractérisé en ce que** les photodétecteurs (7) du tableau de photodétecteurs (6A) associé à la piste de comptage d'impulsions (10) sont divisés en un premier groupe (A) de photodétecteurs, un deuxième groupe (B) de photodétecteurs, un troisième groupe (A') de photodétecteurs et un quatrième groupe (B') de photodétecteurs, dans lequel les photodétecteurs d'un groupe de photodétecteurs produisent respectivement un signal de comptage d'impulsions (A, B, A', B'), et
**en ce que** le premier groupe ou le deuxième groupe de photodétecteurs du tableau de photodétecteurs (6B) associé à la piste index et le premier groupe, le deuxième groupe, le troisième groupe ou le quatrième groupe de photodétecteurs du tableau de photodétecteurs (6A) associé à la piste de comptage d'impulsions sont réalisés respectivement sous la forme d'un composant électrique, qui a la même capacité électrique.

8. Dispositif selon l'une quelconque des revendications 1 à 7, **caractérisé en ce que** le premier groupe ou le deuxième groupe de photodétecteurs du tableau de photodétecteurs (6B) associé à la piste index présentent respectivement le même nombre de photodétecteurs que le premier groupe ou le deuxième groupe ou le troisième groupe ou le quatrième groupe de photodétecteurs du tableau de photodétecteurs (6A) associé à la piste de comptage d'impulsions.

9. Dispositif selon l'une quelconque des revendications 1 à 8, **caractérisé en ce que** les photodétecteurs du premier groupe ou du deuxième groupe de photodétecteurs du tableau de photodétecteurs (6B) associé à la piste index et les photodétecteurs du premier groupe ou du deuxième groupe ou du troisième groupe ou du quatrième groupe de photodétecteurs du tableau de photodétecteurs (6A) associé à la piste de comptage d'impulsions forment des segments avec la même surface.

10. Dispositif selon l'une quelconque des revendications 1 à 9, **caractérisé en ce que** les photodétecteurs du tableau de photodétecteurs (6A) associé à la piste de comptage d'impulsions et les photodétecteurs du tableau de photodétecteurs (6B) associé à la piste index sont les mêmes photodétecteurs (7).

11. Dispositif selon l'une quelconque des revendications 1 à 10, **caractérisé en ce que** les photodétecteurs sont des photodiodes (7).

12. Dispositif selon l'une quelconque des revendications il à 11, **caractérisé en ce que** le masque de codage (9) est réalisé sous la forme d'un disque rotatif.

13. Dispositif selon l'une quelconque des revendications 1 à 11, **caractérisé en ce que** le masque de codage (9) est réalisé sous la forme d'une bande pouvant être coulissée.
